# FASCICULE DE BREVET EUROPEEN

(11) **EP 2 754 612 B1**
(45) Date de publication et mention de la délivrance du brevet: **16.09.2015**
(21) Numéro de dépôt: 13199520.1
(22) Date de dépôt: 24.12.2013
(51) Int. Cl.: B64D 27/26

(54) **Manille à trois points à capacité de filtrage de vibrations et attache moteur d'aéronef équipée d'une telle manille**
Dreipunkt-Schäkel mit Schwingungsfilterfähigkeit, und Motorbefestigung eines Luftfahrzeugs, die mit einem solchen Schäkel ausgestattet ist
Three-point shackle with vibration-filtering capacity and aircraft engine attachment provided with such a shackle

(30) Priorité: 28.12.2012 FR 1262951
(43) Date de publication de la demande: 16.07.2014
(73) Titulaire: Airbus Opérations SAS, 31060 Toulouse (FR)
(72) Inventeur: Brochard, Wolfgang, 31300 TOULOUSE (FR); Terral, Romain, 31300 TOULOUSE (FR)
(74) Mandataire: Ahner, Philippe

(56) Documents cités:
- EP-A1- 2 500 268
- EP-A2- 1 129 942
- EP-A2- 2 103 516
- DE-A1-102004 000 029

## Description

### DOMAINE TECHNIQUE

La présente invention concerne une manille à trois points pour attache moteur d'aéronef.

Elle concerne également une attache moteur comprenant une telle manille, un ensemble propulsif comportant une telle attache moteur, et un aéronef équipé d'un tel ensemble propulsif.

### ÉTAT DE LA TECHNIQUE ANTÉRIEURE

L'accrochage des turbomoteurs des avions à la voilure ou au fuselage est habituellement réalisé au moyen d'un mât auquel le turbomoteur est relié par l'intermédiaire d'attaches moteur et de bielles de reprise des efforts de poussée (voir, par exemple, le document EP2103516).

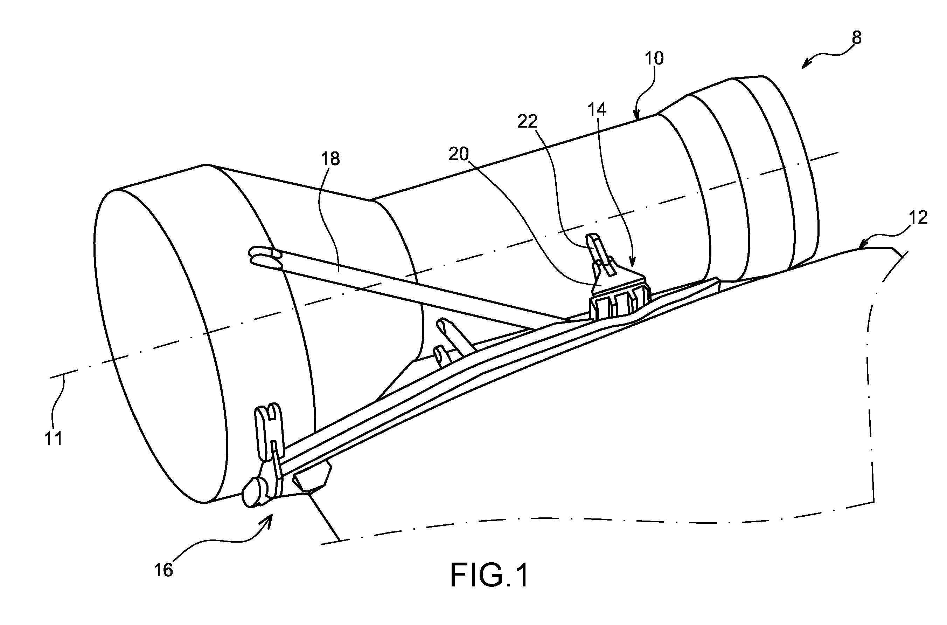

La figure 1 illustre un exemple d'ensemble propulsif 8, du type destiné à être rapporté latéralement sur une partie arrière de fuselage d'avion. Cet ensemble propulsif 8 comporte un turboréacteur 10, par exemple du type à hélice non carénée disposée à l'arrière, couramment dénommé *« open rotor pusher »,* et un mât 12, visible partiellement, auquel le turboréacteur est relié. Les hélices, la nacelle et l'entrée d'air du turboréacteur 10 ne sont pas représentées sur la figure 1, de sorte que seuls les principaux carters structuraux du turboréacteur sont visibles. Le turboréacteur 10 présente un axe longitudinal 11.

L'accrochage du turboréacteur 10 au mât 12 est principalement assuré par une attache moteur avant 14, une attache moteur arrière 16, et deux bielles de reprise des efforts de poussée 18, dont l'une seulement est visible sur la figure 1.

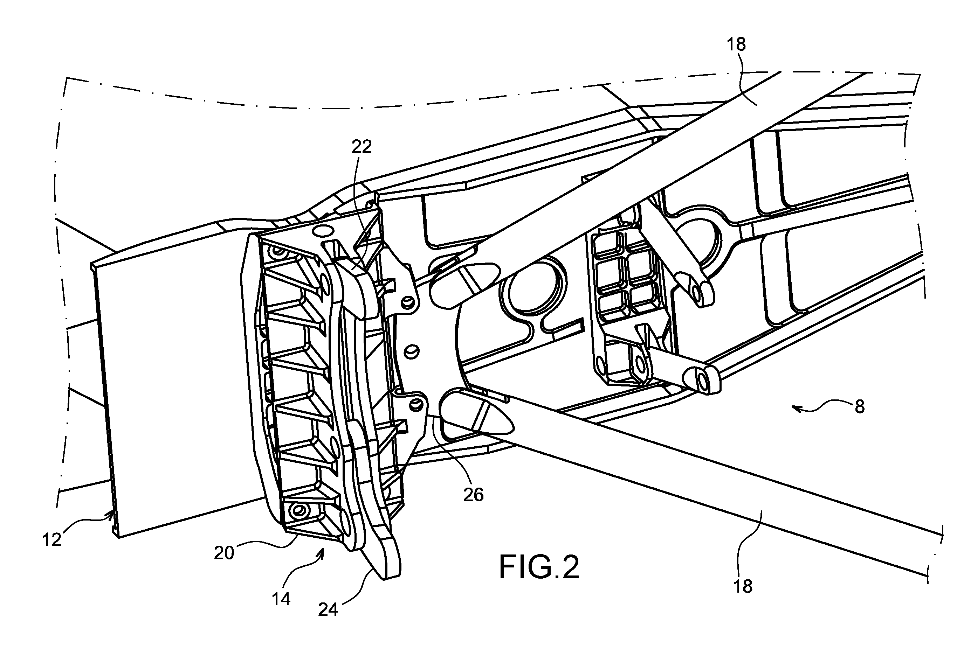

La figure 2 illustre à plus grande échelle l'attache moteur avant 14 ainsi que la liaison des bielles 18 à une structure rigide du mât 12.

L'attache moteur avant 14 comporte une ferrure 20 fixée sur le mât 12 et formant une structure support, à laquelle sont reliées une bielle 22 et une manille 24 à trois points, également dénommée « manille boomerang ». Le bielle 22 est articulée à la ferrure 20 au moyen d'un premier pivot, et est destinée à être articulée au turboréacteur 10 au moyen d'un deuxième pivot. La manille 24 est reliée à la ferrure 20 au moyen de deux pivots, et est destinée à être articulée au turboréacteur 10 au moyen d'un troisième pivot. Les pivots de la bielle 22 et de la manille 24 s'étendent parallèlement à l'axe longitudinal 11 du turboréacteur visible sur la figure 1. Enfin, les bielles de reprise des efforts de poussée 18 sont articulées chacune à un palonnier 26 qui est lui-même relié à la ferrure 20 au moyen de deux pivots. Les pivots des éléments décrits ci-dessus ne sont pas représentés sur la figure 2 pour des raisons de clarté.

Il est à noter que les pivots précités peuvent intégrer chacun une rotule afin de donner plus de liberté aux éléments articulés et de réduire les moments parasites, d'une manière bien connue.

La manille 24 à trois points a en particulier pour fonction la reprise des efforts orientés transversalement par rapport à l'axe longitudinal du turboréacteur, ainsi que la reprise du couple moteur autour de l'axe longitudinal précité.

Toutefois, la liaison du turboréacteur 10 au mât 12 au moyen des éléments décrits ci-dessus entraîne une transmission des vibrations du turboréacteur vers le mât 12.

Cela est particulièrement gênant dans le cas des ensembles propulsifs rapportés sur le fuselage de l'avion, comme décrit ci-dessus, car les vibrations sont alors directement transmises à la structure du fuselage. Ces vibrations sont ainsi susceptibles d'accroître l'usure de la structure du fuselage, et de nuire au confort des passagers.

Les ensembles propulsifs accrochés au-dessus ou au-dessous de la voilure des avions comportent en général une configuration d'attaches moteur et de bielles de reprise des efforts de poussée analogue à celle décrite ci-dessus.

Dans ces derniers ensembles propulsifs, les vibrations induites par les turbomoteurs sont en principe amorties par la souplesse de la voilure.

Toutefois, lorsque l'intensité de ces vibrations est particulièrement élevée, notamment en cas d'incident de fonctionnement d'un turbomoteur, les vibrations de ce dernier risquent également d'être transmises à la structure du fuselage de l'avion.

### EXPOSÉ DE L'INVENTION

L'invention a notamment pour but d'apporter une solution simple, économique et efficace à ce problème.

L'invention propose à cet effet une manille pour attache moteur d'aéronef, comprenant :
- un premier orifice et un deuxième orifice, tous deux destinés à relier ladite manille à un mât d'aéronef, et
- un troisième orifice, destiné à relier ladite manille à un moteur d'aéronef,
et dans laquelle ledit troisième orifice est écarté par rapport à un plan passant simultanément par un axe dudit premier orifice et par un axe dudit deuxième orifice.

Bien entendu, d'une manière connue en soi, lorsque ladite manille est vue en section selon un quelconque plan orthogonal aux axes desdits premier et deuxième orifices, un premier segment de droite, allant de l'axe dudit premier orifice jusqu'à un axe dudit troisième orifice, traverse une région extérieure à ladite manille.

Selon l'invention, ladite manille est conformée de sorte que, lorsqu'elle est vue en section selon ledit plan orthogonal auxdits axes, un second segment de droite allant de l'axe dudit deuxième orifice jusqu'à l'axe dudit troisième orifice traverse ladite région extérieure à la manille.

Il est à comprendre que, dans la terminologie de la présente invention, les premier, deuxième et troisième orifices sont agencés dans cet ordre le long de la manille.

L'invention propose ainsi une manille de forme originale, permettant de conférer à cette manille des propriétés d'élasticité vis-à-vis des efforts transversaux, c'est-à-dire les efforts orientés orthogonalement aux axes précités.

Une telle souplesse ou élasticité rend la manille apte à opérer un filtrage d'éventuelles vibrations relatives d'organes de liaison montés respectivement dans les orifices précités de la manille, tout en supportant les charges susceptibles d'être appliquées à cette manille.

Le degré de souplesse ou d'élasticité de la manille peut être accru notamment au moyen de l'une des caractéristiques facultatives suivantes ou au moyen d'une combinaison de plusieurs de ces caractéristiques.

Ladite région extérieure à la manille est de préférence traversée par une portion dudit second segment de droite ayant une longueur supérieure ou égale au tiers de la longueur de ce second segment de droite, et encore préférentiellement supérieure à la moitié de la longueur de ce second segment de droite.

Lorsque ladite manille est vue en section selon un quelconque plan orthogonal aux axes respectifs desdits orifices, une première portion de la manille, reliant ledit deuxième orifice audit troisième orifice, présente avantageusement un bord, situé du côté dudit second segment de droite, dont au moins une portion est écartée d'une droite superposée audit second segment de droite, d'une distance supérieure au quart de la longueur dudit second segment de droite, et encore préférentiellement supérieure au tiers de la longueur dudit second segment de droite.

Lorsque ladite manille est vue en section selon un quelconque plan orthogonal aux axes respectifs desdits orifices, une deuxième portion de la manille, située entre lesdits deuxième et troisième orifices et délimitée par deux demi-droites partant du milieu du second segment de droite en s'étendant chacune en direction de la manille, présente de préférence deux bords incurvés opposés présentant chacun une concavité orientée vers ledit second segment de droite, en tout point depuis l'une jusqu'à l'autre desdites demi-droites.

Lesdites demi-droites forment de préférence entre elles un angle saillant supérieur à 90 degrés.

Préférentiellement, celui desdits bords incurvés qui est situé du côté dudit second segment de droite présente, en tout point de ladite deuxième portion de la manille, un rayon de courbure supérieur au quart de la longueur du second segment de droite, et ledit bord incurvé opposé présente, en tout point de ladite deuxième portion de la manille, un rayon de courbure supérieur au tiers de la longueur du second segment de droite.

Lorsque ladite manille est vue en section selon un quelconque plan orthogonal aux axes respectifs desdits orifices, ladite deuxième portion de la manille présente avantageusement une section se réduisant dans la direction allant dudit deuxième orifice vers ledit troisième orifice, depuis l'une jusqu'à l'autre desdites deux demi-droites.

Lorsque ladite manille est vue en section selon un quelconque plan orthogonal aux axes respectifs desdits orifices, la manille est de préférence conformée de sorte qu'il existe deux demi-droites ayant une origine commune, telles qu'une première de ces demi-droites passe par les axes respectifs desdits premier et deuxième orifices, qu'une seconde de ces demi-droites soit tangente à une ligne moyenne de ladite deuxième portion de la manille, en un point situé du côté dudit troisième orifice relativement à ladite première demi-droite, et que ces deux demi-droites forment entre elles un angle inférieur à 90 degrés, et encore préférentiellement inférieur à 75 degrés, et idéalement compris entre 50 degrés et 70 degrés.

L'invention concerne également une attache moteur pour aéronef, comprenant :
- une structure support destinée à être solidaire d'un mât d'aéronef et comportant un premier orifice et un deuxième orifice,
- un premier organe de liaison et un deuxième organe de liaison qui sont respectivement montés ajustés dans lesdits premier et deuxième orifices de ladite structure support, et
- un troisième organe de liaison destiné à être relié à un moteur d'aéronef.

Selon l'invention, l'attache moteur comprend au moins une manille du type décrit ci-dessus, et lesdits premier et deuxième organes de liaison sont montés ajustés dans lesdits premier et deuxième orifices de ladite manille, et ledit troisième organe de liaison est monté ajusté dans ledit troisième orifice de ladite manille.

La manille précitée permet de rendre l'attache moteur apte à assurer un filtrage d'éventuelles vibrations du troisième organe de liaison par rapport au deuxième organe de liaison. De telles vibrations peuvent en effet être transmises au troisième organe de liaison par un moteur d'aéronef relié à ce dernier organe de liaison.

D'une manière générale, chacun desdits organes de liaison prend par exemple la forme d'un pivot ou comprend un tel pivot. Ce pivot intègre avantageusement une rotule, d'une manière connue en soi.

L'attache moteur comprend avantageusement un dispositif de dissipation d'énergie mécanique reliant mutuellement lesdits deuxième et troisième organes de liaison de manière à dissiper une partie au moins de l'énergie des éventuelles vibrations relatives de ces organes de liaison.

Un tel dispositif, également dénommé amortisseur dans ce qui suit, présente de préférence un axe de travail passant par les axes respectifs desdits deuxième et troisième orifices de ladite manille.

Par ailleurs, l'attache moteur peut comprendre, outre ladite manille, appelée « manille souple », au moins une autre manille, appelée « manille rigide », cette dernière comprenant :
- un premier orifice et un deuxième orifice, dans lesquels lesdits premier et deuxième organes de liaison sont respectivement montés ajustés, et
- un troisième orifice, dans lequel ledit troisième organe de liaison est monté avec jeu,
et ladite manille rigide étant conformée de sorte que, lorsqu'elle est vue en section selon un quelconque plan orthogonal à des axes respectifs desdits orifices de ladite manille rigide, un premier segment de droite allant de l'axe du premier orifice jusqu'à un axe du troisième orifice de la manille rigide traverse une région extérieure à la manille rigide, mais un second segment de droite allant de l'axe dudit deuxième orifice jusqu'à l'axe dudit troisième orifice est intégralement situé à l'intérieur de ladite manille rigide.

La manille rigide permet la reprise d'efforts transversaux ayant une intensité supérieure à un seuil prédéterminé, comme cela apparaîtra plus clairement dans ce qui suit.

De préférence, ladite manille rigide est conformée de sorte que, lorsqu'elle est vue en section selon un quelconque plan orthogonal à des axes respectifs desdits orifices de ladite manille rigide, tout couple de demi-droites ayant une origine commune, telles qu'une première de ces demi-droites passe par les axes respectifs desdits premier et deuxième orifices de ladite manille rigide, et qu'une seconde de ces demi-droites soit tangente à une ligne moyenne d'une portion de la manille rigide reliant lesdits deuxième et troisième orifices de celle-ci, en un point situé du côté dudit troisième orifice relativement à ladite première demi-droite, forme entre lesdites demi-droites un angle supérieur à 90 degrés.

L'invention concerne également un ensemble propulsif pour aéronef, comprenant un turbomoteur ainsi qu'un mât destiné à l'accrochage dudit turbomoteur à une cellule d'aéronef, et comprenant au moins une attache moteur du type décrit ci-dessus, reliant ledit turbomoteur audit mât.

Lorsque ladite attache moteur comprend au moins une manille souple et au moins une manille rigide comme décrit ci-dessus, lesdites manilles souple et rigide sont avantageusement conformées de sorte que ladite manille souple maintienne un jeu entre ledit troisième organe de liaison et ladite manille rigide tant que les efforts transversaux appliqués à ladite attache moteur sont d'un niveau inférieur à un seuil prédéterminé, et de sorte que ledit troisième organe de liaison arrive en butée dans ledit troisième orifice de ladite manille rigide moyennant une déformation suffisante de ladite manille souple, lorsque lesdits efforts transversaux sont d'un niveau supérieur audit seuil prédéterminé.

Lorsque les efforts transversaux sont d'un niveau inférieur au seuil précité, ces efforts sont ainsi intégralement repris par chaque manille souple, tandis que chaque manille rigide demeure inactive.

En revanche, lorsque les efforts transversaux sont d'un niveau supérieur au seuil précité, le surplus d'efforts est repris par chaque manille rigide et n'induit aucune déformation supplémentaire de chaque manille souple.

Le seuil précité est de préférence défini comme étant égal à un niveau de charge maximal prévu pour un phénomène de perte de pale ou de fonctionnement en moulinet déséquilibré suite à un tel phénomène.

Cette configuration permet ainsi de faciliter la compréhension et la maîtrise du comportement mécanique de l'attache moteur en cas d'efforts extrêmes, cette maîtrise étant nécessaire à la satisfaction d'exigences réglementaires, tout en bénéficiant de la souplesse de chaque manille souple tant en fonctionnement normal qu'en cas de perte de pale.

L'invention concerne enfin un aéronef, comprenant au moins un ensemble propulsif du type décrit ci-dessus.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1, déjà décrite, est une vue schématique partielle en perspective d'un ensemble propulsif pour aéronef d'un type connu, comprenant un turbomoteur, un mât, ainsi que des attaches moteur reliant le turbomoteur au mât ;
- la figure 2, déjà décrite, est une vue schématique partielle en perspective du mât et des attaches moteur de l'ensemble propulsif de la figure 1 dépourvu de son turbomoteur;
- la figure 3 est une vue schématique partielle en perspective d'une attache moteur selon un premier mode de réalisation préféré de l'invention ;
- la figure 4 est une vue schématique en perspective d'une manille à trois points faisant partie de l'attache moteur de la figure 3 ;
- la figure 5a est une vue schématique en coupe de la manille à trois points de la figure 4, illustrant certaines propriétés géométriques de la manille ;
- la figure 5b est une vue semblable à la figure 5a, illustrant d'autres propriétés géométriques de la manille ;
- la figure 6 est une vue schématique partielle en section d'une attache moteur selon un deuxième mode de réalisation préféré de l'invention, selon un plan orthogonal aux organes de liaison de l'attache moteur et passant par une manille à trois points de cette dernière ;
- la figure 7 est une vue schématique partielle en perspective d'une attache moteur selon un troisième mode de réalisation préféré de l'invention ;
- la figure 8 est une vue schématique en section de l'attache moteur de la figure 7, selon un plan orthogonal aux organes de liaison de l'attache moteur et passant par une manille à trois points rigide faisant partie de cette attache moteur.

Dans l'ensemble de ces figures, des références identiques peuvent désigner des éléments identiques ou analogues.

### EXPOSÉ DÉTAILLÉ DE MODES DE RÉALISATION PRÉFÉRÉS

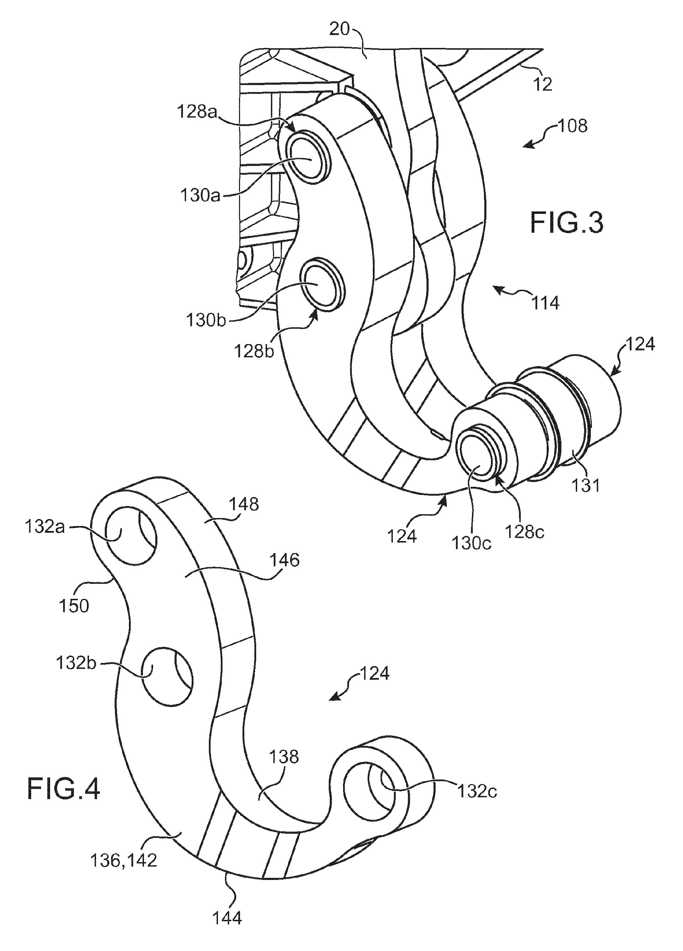

La figure 3 illustre une partie d'un ensemble propulsif 108 d'un aéronef, qui est semblable à l'ensemble propulsif 8 des figures 1 et 2 mais dont l'attache moteur avant 114 comporte deux manilles à trois points 124 dotées d'une souplesse permettant un filtrage des vibrations du turboréacteur. Pour des raisons de clarté, ce turboréacteur n'est pas visible sur la figure 3.

Les deux manilles 124 sont semblables et sont montées en parallèle, c'est-à-dire qu'elles partagent les mêmes axes, de manière à assurer une fonction de sécurité intrinsèque, également dénommée « fonction *fail safe* », comme cela apparaîtra plus clairement dans ce qui suit.

L'attache moteur avant 114 comporte donc une ferrure 20 fixée sur une structure primaire du mât 12 de l'ensemble propulsif et comportant deux orifices (masqués sur les figures) pour le passage d'un premier organe de liaison 128a et d'un deuxième organe de liaison 128b. Chacun de ces organes de liaison comprend essentiellement un axe ou pivot 130a, 130b muni d'un palier (masqué sur la figure 3) agencé à l'intérieur de l'orifice correspondant de la ferrure 20.

L'attache moteur avant 114 comporte en outre les deux manilles 124 montées sur les organes de liaison 128a, 128b précités, et portant un troisième organe de liaison 128c comprenant essentiellement un axe ou pivot 130c muni d'un palier 131 disposé entre les deux manilles 124 et destiné à être relié au turboréacteur de l'ensemble propulsif (non visible sur les figures).

Les pivots 130a et 130b intègrent de préférence une rotule montée dans l'orifice correspondant de la ferrure 20, ce dernier étant conformé de manière à permettre une liaison rotulante avec le pivot correspondant, afin de réduire les efforts parasites, d'une manière connue en soi. De manière analogue, le pivot 130c intègre de préférence une rotule montée dans le palier 131.

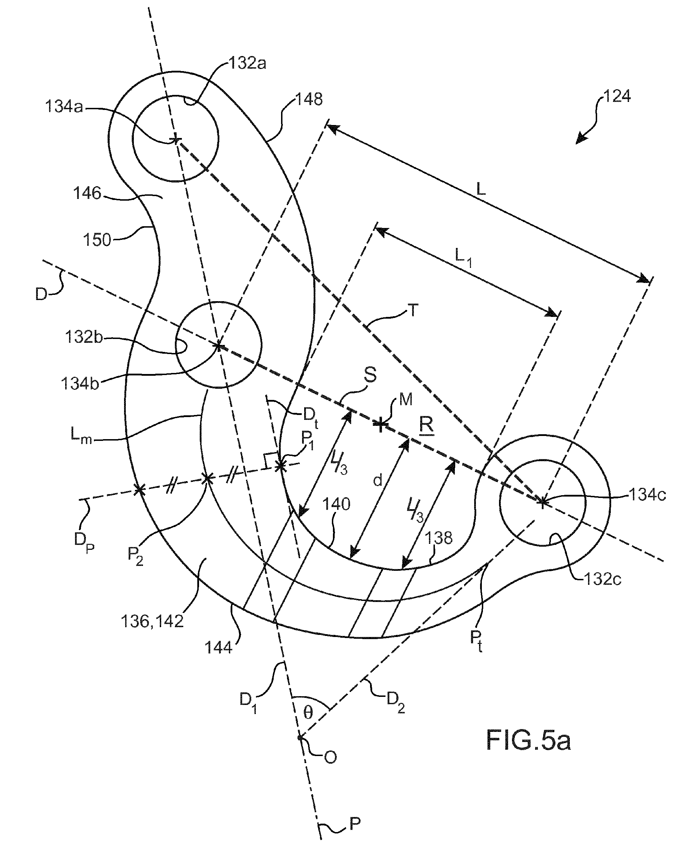

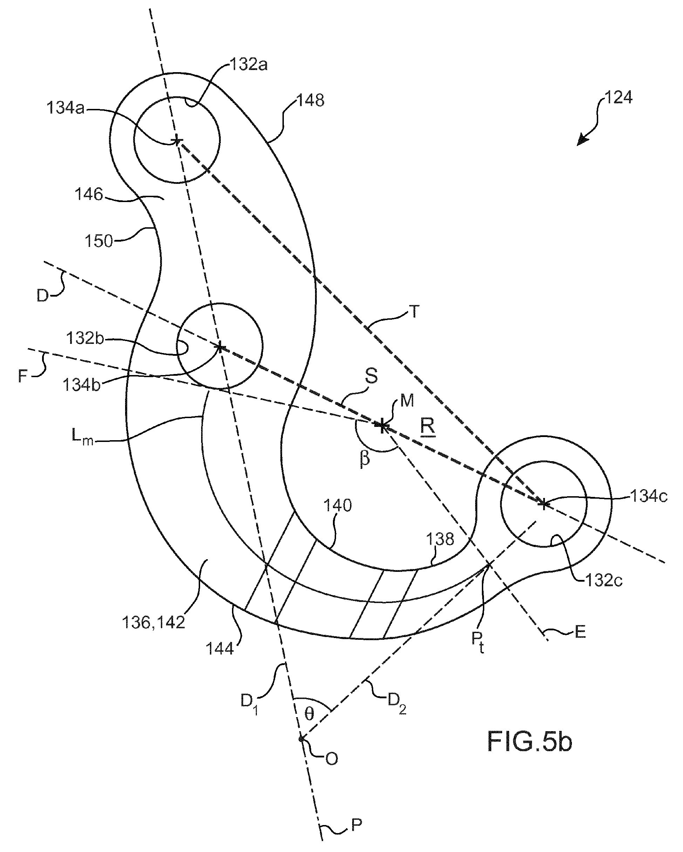

L'une des manilles 124 va maintenant être décrite en détail en référence aux figures 4, 5a et 5b.

La manille 124 comporte un premier orifice 132a destiné à recevoir le pivot 130a du premier organe de liaison 128a de manière ajustée, et un deuxième orifice 132b destiné à recevoir le pivot 130b du deuxième organe de liaison 128b, également de manière ajustée.

La manille 124 comporte en outre un troisième orifice 132c destiné à recevoir le pivot 130c du troisième organe de liaison 128c de manière ajustée.

Comme le montre la figure 4, la forme de la manille 124 peut être obtenue par la projection de sa section, représentée sur chacune des figures 5a et 5b, dans une direction orthogonale au plan de cette section, c'est-à-dire une direction parallèle aux axes 134a, 134b, 134c respectifs des orifices 132a, 132b et 132c. Par conséquent, la description qui suit de la manille 124 se réfère aux figures 5a et 5b et est valable pour tout plan de coupe orthogonal aux axes précités. Néanmoins, la manille 124 peut être de forme variable le long de la direction des axes précités, sans sortir du cadre de l'invention.

D'une manière connue en soi, le troisième orifice 132c est écarté d'un plan P passant simultanément par l'axe 134a du premier orifice 132a et par l'axe 134b du deuxième orifice 132b.

De plus, un premier segment de droite T allant de l'axe 134a du premier orifice 132a jusqu'à l'axe 134c du troisième orifice 132c traverse une région R extérieure à la manille 124.

Selon l'invention, un second segment de droite S allant de l'axe 134b du deuxième orifice 132b jusqu'à l'axe 134c du troisième orifice 132c traverse également la région R extérieure à la manille 124.

De préférence, la longueur L1 d'une portion du second segment de droite S, intégralement située dans la région R extérieure à la manille 124, est supérieure au tiers de la longueur L de ce second segment de droite S (figure 5a). Dans l'exemple illustré, la longueur L1 de ladite portion du second segment de droite S est en particulier supérieure à la moitié de la longueur L de ce dernier.

De plus, une première portion 136 de la manille 124, reliant le deuxième orifice 132b au troisième orifice 132c, présente un bord 138, situé du côté du second segment de droite S, dont une portion 140 est écartée d'une droite D superposée au second segment de droite S, d'une distance d supérieure au tiers de la longueur L dudit second segment de droite (figure 5a). De manière conventionnelle, la distance d est mesurée orthogonalement à la droite D.

Par ailleurs, dans une deuxième portion 142 de la manille 124 incluse dans la première portion 136 précitée de celle-ci, et délimitée par deux demi-droites E et F partant du milieu M du second segment de droite S et s'étendant chacune en direction de la manille 124 (figure 5b), le bord 138 précité est incurvé et présente une concavité orientée vers le second segment de droite S, en tout point du bord 138 depuis une première extrémité de la deuxième portion 142 correspondant à la demi-droite E jusqu'à une deuxième extrémité de la deuxième portion 142 correspondant à la demi-droite F. Il en est de même en ce qui concerne un bord opposé 144 de la première portion 136 de la manille. Bien entendu, la deuxième portion 142 de la manille 124 étant incluse dans la première portion 136 précitée de celle-ci, la deuxième portion 142 est agencée entre le deuxième orifice 132b et le troisième orifice 132c de la manille.

Les deux demi-droites E et F délimitant la deuxième portion 142 précitée de la manille forment un secteur angulaire d'angle saillant β égal à 120 degrés environ, et de préférence supérieur à 90 degrés, dans lequel s'étend la deuxième portion 142 de la manille.

En tout point de la deuxième portion 142 de la manille, le bord 138 précité présente avantageusement un rayon de courbure supérieur au quart de la longueur L du second segment de droite S. Dans l'exemple illustré, le rayon de courbure du bord 138 est, en tout point de la deuxième portion 142, supérieur au tiers de la longueur L du second segment de droite S.

De manière analogue, en tout point de la deuxième portion 142 de la manille, le bord 144 opposé au bord 138 présente avantageusement un rayon de courbure supérieur au tiers de la longueur L du second segment de droite S. Dans l'exemple illustré, le rayon de courbure du bord 144 est, en tout point de la deuxième portion 142, supérieur à la moitié de la longueur L du second segment de droite S.

En outre, les figures 5a et 5b illustrent deux demi-droites ayant une origine commune O et telles que :
- la première demi-droite D1 passe par les axes respectifs 134a, 134b des premier et deuxième orifices 132a, 132b, et
- la seconde demi-droite D2 soit tangente à une ligne moyenne Lm de la deuxième portion 142 de la manille, en un point Pt situé du côté du troisième orifice 132c par rapport à la première demi-droite D1.

Dans l'exemple illustré, les demi-droites D1 et D2 forment entre elles un angle aigu θ égal à 60 degrés environ. De manière générale, l'angle θ est de préférence inférieur à 90 degrés, et encore préférentiellement inférieur à 75 degrés, et idéalement compris entre 50 degrés et 70 degrés.

Par « ligne moyenne », il faut comprendre une ligne définie comme l'ensemble des points P2 (figure 5a) obtenus en projetant chaque point P1 du bord 138 précité, selon une direction Dp perpendiculaire à la direction Dt tangente au bord 138 au niveau dudit point P1, en direction du bord 144 opposé, et en s'arrêtant à mi-distance de ce bord 144 opposé.

Il apparaît en outre sur les figures 4 et 5b que la deuxième portion 142 de la manille présente une section se réduisant dans la direction allant du deuxième orifice 132b vers le troisième orifice 132c, depuis la demi-droite F jusqu'à l'autre demi-droite E.

Il est à noter qu'une troisième portion 146 de la manille 124, reliant le premier orifice 132a au deuxième orifice 132b, présente des bords opposés 148 et 150 incurvés dont la concavité est inversée par rapport à la concavité des bords 138, 144 dans la deuxième portion 142 de la manille.

En fonctionnement, du fait de la géométrie des manilles 124, l'attache moteur 114 présente une élasticité vis-à-vis des efforts transversaux, c'est-à-dire des efforts orientés orthogonalement aux axes 134a, 134b, 134c.

Les manilles 124 permettent ainsi de filtrer les vibrations éventuelles entre le turboréacteur relié au troisième organe de liaison 128c et le mât relié aux premier et deuxième organes de liaison 128a, 128b (figure 3), notamment en cas de perte de pale et lors d'un fonctionnement en moulinet déséquilibré *(« windmilling imbalance »)* postérieur à une telle perte de pale.

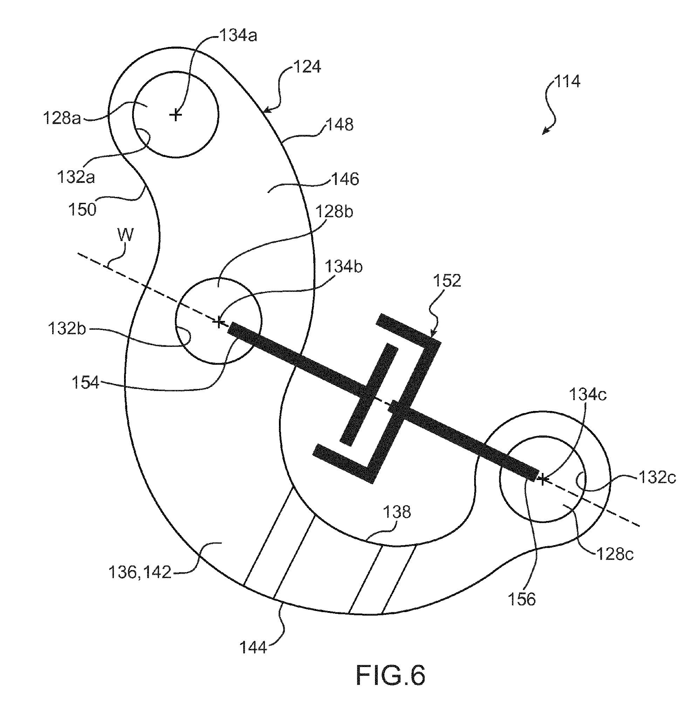

La figure 6 illustre un deuxième mode de réalisation de l'invention, dans lequel l'attache moteur 114 comprend en outre un dispositif de dissipation d'énergie mécanique 152, ou amortisseur, reliant mutuellement les deuxième et troisième organes de liaison 128b, 128c.

L'amortisseur 152, représenté très schématiquement, comporte une première extrémité longitudinale 154 montée pivotante sur le deuxième organe de liaison 128b, et une seconde extrémité longitudinale 156 montée pivotante sur le troisième organe de liaison 128c. L'amortisseur 152 présente ainsi un axe de travail W passant par les axes 134b, 134c respectifs des deuxième et troisième orifices 132b, 132c de chaque manille 124.

Cet amortisseur 152 peut être de tout type conventionnel approprié, par exemple du type hydraulique, hydropneumatique, magnéto-rhéologique, ou autre.

D'une manière générale, l'amortisseur 152 permet de dissiper au moins en partie l'énergie cinétique relative à d'éventuelles vibrations entre les deuxième et troisième organes de liaison 128b, 128c.

En variante, l'amortisseur 152 peut être fixé directement sur l'une des manilles 124 ou sur chacune de ces manilles, de préférence d'une manière telle que l'axe de travail de l'amortisseur passe par les axes 134b, 134c respectifs des deuxième et troisième orifices 132b, 132c de chaque manille 124.

Dans les premier et deuxième modes de réalisation décrits ci-dessus, les manilles 124 sont dimensionnées pour supporter les charges extrêmes prévues par les exigences réglementaires.

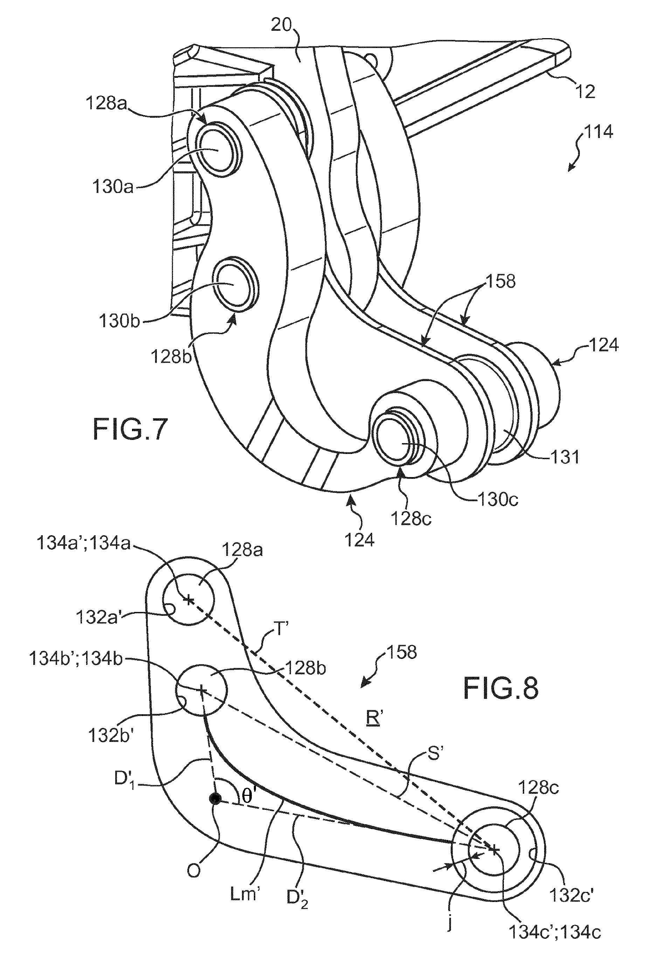

La figure 7 illustre un troisième mode de réalisation de l'invention, dans lequel chaque manille 124, appelée « manille souple », est associée à une autre manille 158, appelée « manille rigide », également visible sur la figure 8.

Chaque manille rigide 158 comprend un premier orifice 132a' et un deuxième orifice 132b' (figure 8), dans lesquels les premier et deuxième organes de liaison 128a, 128b sont respectivement montés ajustés.

Chaque manille rigide 158 comprend également un troisième orifice 132c', dans lequel le troisième organe de liaison 128c est monté avec un jeu j.

La figure 8 illustre notamment la manille rigide 158 en section selon un plan orthogonal aux axes 134a', 134b', 134c' respectifs des orifices de cette manille rigide, qui se superposent respectivement aux axes 134a, 134b, 134c respectifs des orifices de la manille souple 124 correspondante.

Comme le montre cette figure 8, un premier segment de droite T' allant de l'axe 134a' du premier orifice 132a' jusqu'à l'axe 134c' du troisième orifice 132c' traverse une région R' extérieure à la manille rigide 158, mais un second segment de droite S' allant de l'axe 134b' du deuxième orifice 132b' jusqu'à l'axe 134c' du troisième orifice 132c' est intégralement situé à l'intérieur de la manille rigide 158.

De plus, il apparaît clairement que tout couple de demi-droites D1', D2' ayant une origine O commune, et dont l'une D1' passe par les axes respectifs 134a', 134b' des premier et deuxième orifices, et dont l'autre D2' est tangente à une ligne moyenne Lm' de la manille rigide 158 en un point quelconque situé entre la première demi-droite D1' et le troisième orifice 132c', forme entre les deux demi-droites D1' et D2' un angle θ' supérieur à 90 degrés.

Les manilles rigides 158 présentent ainsi une forme conventionnelle, et sont en particulier dépourvues d'élasticité eu égard aux niveaux de charge auxquels l'attache moteur 114 est susceptible d'être soumise.

Dans l'attache moteur 114 selon ce troisième mode de réalisation de l'invention, les manilles souples 124 et les manilles rigides 158 sont telles que les manilles souples 124 maintiennent un jeu (illustré par la flèche j de la figure 8) entre le pivot 130c du troisième organe de liaison 128c et les manilles rigides 158 tant que les charges appliquées à l'attache moteur ne dépassent pas un seuil prédéterminé correspondant à un niveau de charge maximal prévu pour un phénomène de perte de pale ou de fonctionnement en moulinet déséquilibré suite à un tel phénomène. La déformation des manilles souples 124 est donc limitée tant que les charges appliquées n'atteignent pas le seuil précité.

En revanche, lorsque la charge atteint le seuil précité, chaque manille souple 124 se déforme au point que le pivot 130c du troisième organe de liaison 128c arrive en butée dans le troisième orifice 132c' de chaque manille rigide 158. Le surplus d'efforts est ainsi transmis directement par les manilles rigides 158 sans induire de déformation supplémentaire des manilles souples 124.

Dans l'exemple illustré, le troisième orifice 132c' de chaque manille rigide 158 est de forme circulaire, de sorte que le jeu j est le même pour toutes les directions autour de l'axe 134c.

En variante, le troisième orifice 132c' de chaque manille rigide 158 peut être de forme non axisymétrique, de sorte que le jeu j varie alors selon la direction autour de l'axe 134c. La forme du troisième orifice 132c' peut ainsi être modulée en fonction de la direction et du niveau des sollicitations auxquelles l'attache moteur 114 est susceptible d'être soumise.

Bien entendu, l'attache moteur selon l'invention peut être appliquée au support de turbomoteurs de types différents, et peut en outre être adaptée à un ensemble propulsif fixé sur ou sous la voilure d'un aéronef, sans sortir du cadre de l'invention.

## Revendications

1. Manille (124) pour attache moteur (114) d'aéronef, comprenant :
- un premier orifice (132a) et un deuxième orifice (132b), tous deux destinés à relier ladite manille (124) à un mât (112) d'aéronef, et
- un troisième orifice (132c), destiné à relier ladite manille (124) à un moteur d'aéronef,
dans laquelle :
- ledit troisième orifice (132c) est écarté par rapport à un plan (P) passant simultanément par un axe (134a) dudit premier orifice (132a) et par un axe (134b) dudit deuxième orifice (132b), et
- lorsque ladite manille est vue en section selon un quelconque plan orthogonal aux axes (134a, 134b) desdits premier et deuxième orifices, un premier segment de droite (T), allant de l'axe (134a) dudit premier orifice (132a) jusqu'à un axe (134c) dudit troisième orifice (132c), traverse une région (R) extérieure à ladite manille,
ladite manille étant **caractérisée en ce qu'**elle est conformée de sorte que, lorsque ladite manille est vue en section selon ledit plan orthogonal auxdits axes (134a, 134b) desdits premier et deuxième orifices, un second segment de droite (S), allant de l'axe (134b) dudit deuxième orifice jusqu'à l'axe (134c) dudit troisième orifice, traverse ladite région (R) extérieure à la manille.

2. Manille selon la revendication 1, dans laquelle ladite région (R) extérieure à la manille (124) est traversée par une portion dudit second segment de droite (S) ayant une longueur (L1) supérieure ou égale au tiers de la longueur (L) dudit second segment de droite.

3. Manille selon la revendication 1 ou 2, dans laquelle, lorsque ladite manille (124) est vue en section selon un quelconque plan orthogonal aux axes (134a, 134b, 134c) respectifs desdits orifices, une première portion (136) de la manille, reliant ledit deuxième orifice (132b) audit troisième orifice (132c), présente un bord (138), situé du côté dudit second segment de droite (S), dont au moins une portion (140) est écartée d'une droite (D) superposée audit second segment de droite (S), d'une distance (d) supérieure au quart de la longueur (L) dudit second segment de droite (S).

4. Manille selon l'une quelconque des revendications 1 à 3, dans laquelle, lorsque ladite manille (124) est vue en section selon un quelconque plan orthogonal aux axes (134a, 134b, 134c) respectifs desdits orifices, une deuxième portion (142) de la manille, située entre lesdits deuxième et troisième orifices (132b, 132c) et délimitée par deux demi-droites (E) et (F) partant du milieu (M) du second segment de droite (S) en s'étendant chacune en direction de la manille (124), présente deux bords incurvés opposés (138, 144) présentant chacun une concavité orientée vers ledit second segment de droite (S), en tout point depuis l'une jusqu'à l'autre desdites demi-droites (F) et (E).

5. Manille selon la revendication 4, dans laquelle lesdites demi-droites (E) et (F) forment entre elles un angle saillant (β) supérieur à 90 degrés.

6. Manille selon la revendication 4 ou 5, dans laquelle :
- celui (138) desdits bords incurvés qui est situé du côté dudit second segment de droite (S) présente, en tout point de ladite deuxième portion (142) de la manille, un rayon de courbure supérieur au quart de la longueur (L) du second segment de droite (S), et
- celui (144) desdits bords incurvés qui est situé de l'autre côté de la manille présente, en tout point de ladite deuxième portion (142) de la manille, un rayon de courbure supérieur au tiers de la longueur (L) du second segment de droite (S).

7. Manille selon l'une quelconque des revendications 4 à 6, dans laquelle, lorsque ladite manille (124) est vue en section selon un quelconque plan orthogonal aux axes (134a, 134b, 134c) respectifs desdits orifices, ladite deuxième portion (142) de la manille présente une section se réduisant dans la direction allant dudit deuxième orifice (132b) vers ledit troisième orifice (132c), depuis l'une jusqu'à l'autre desdites deux demi-droites (F) et (E).

8. Manille selon l'une quelconque des revendications 4 à 7, **caractérisée en ce que**, lorsque ladite manille (124) est vue en section selon un quelconque plan orthogonal aux axes (134a, 134b, 134c) respectifs desdits orifices, il existe deux demi-droites ayant une origine (O) commune, telles que :
- une première (D1) de ces demi-droites passe par les axes (134a, 134b) respectifs desdits premier et deuxième orifices (132a, 132b),
- une seconde (D2) de ces demi-droites soit tangente à une ligne moyenne (Lm) de ladite deuxième portion (142) de la manille, en un point (Pt) situé du côté dudit troisième orifice (132c) relativement à ladite première demi-droite (D1), et que
- ces deux demi-droites (D1, D2) forment entre elles un angle (θ) inférieur à 90 degrés.

9. Attache moteur (114) pour aéronef, comprenant :
- une structure support (20) destinée à être solidaire d'un mât (112) d'aéronef et comportant un premier orifice et un deuxième orifice,
- un premier organe de liaison (128a) et un deuxième organe de liaison (128b) qui sont respectivement montés ajustés dans lesdits premier et deuxième orifices de ladite structure support,
- un troisième organe de liaison (128c) destiné à être relié à un moteur d'aéronef, **caractérisée en ce qu'**elle comprend au moins une manille (124) selon l'une quelconque des revendications précédentes,
**en ce que** lesdits premier et deuxième organes de liaison (128a, 128b) sont montés ajustés dans lesdits premier et deuxième orifices (132a, 132b) de ladite manille,
et **en ce que** ledit troisième organe de liaison (128c) est monté ajusté dans ledit troisième orifice (132c) de ladite manille.

10. Attache moteur selon la revendication 9, comprenant en outre un dispositif de dissipation d'énergie mécanique (152) reliant mutuellement lesdits deuxième et troisième organes de liaison (128b, 128c) de manière à amortir d'éventuelles vibrations relatives de ces organes de liaison.

11. Attache moteur selon la revendication 9 ou 10, comprenant, outre ladite manille (124), appelée « manille souple », au moins une autre manille (158), appelée « manille rigide », comprenant :
- un premier orifice (132a') et un deuxième orifice (132b'), dans lesquels lesdits premier et deuxième organes de liaison (128a, 128b) sont respectivement montés ajustés, et
- un troisième orifice (132c'), dans lequel ledit troisième organe de liaison (128c) est monté avec jeu,
ladite manille rigide (158) étant conformée de sorte que, lorsque ladite manille rigide est vue en section selon un quelconque plan orthogonal à des axes (134a', 134b') respectifs desdits orifices de ladite manille rigide, un premier segment de droite (T') allant de l'axe (134a') du premier orifice (132a') jusqu'à un axe (134c') du troisième orifice (132c') de la manille rigide traverse une région (R') extérieure à la manille rigide (158), mais un second segment de droite (S') allant de l'axe (134b') dudit deuxième orifice (132b') jusqu'à l'axe (134c') dudit troisième orifice (132c') de la manille rigide est intégralement situé à l'intérieur de ladite manille rigide (158).

12. Ensemble propulsif (108) pour aéronef, comprenant un turbomoteur ainsi qu'un mât (12) destiné à l'accrochage dudit turbomoteur à une cellule d'aéronef, **caractérisé en ce qu'**il comprend au moins une attache moteur (114) selon l'une quelconque des revendications 9 à 11, reliant ledit turbomoteur audit mât.

13. Ensemble propulsif selon la revendication 12, dans lequel ladite attache moteur (114) est conforme à la revendication 11, et dans lequel lesdites manilles souple (124) et rigide (158) de cette attache moteur sont conformées de sorte que ladite manille souple (124) maintienne un jeu (j) entre ledit troisième organe de liaison (128c) et ladite manille rigide (158) tant que les efforts transversaux appliqués à ladite attache moteur sont d'un niveau inférieur à un seuil prédéterminé, et de sorte que ledit troisième organe de liaison (128c) arrive en butée dans ledit troisième orifice (132c') de ladite manille rigide (158) moyennant une déformation suffisante de ladite manille souple (124), lorsque lesdits efforts transversaux sont d'un niveau supérieur audit seuil prédéterminé.

14. Aéronef, **caractérisé en ce qu'**il comprend au moins un ensemble propulsif (108) selon la revendication 12 ou 13.

## Patentansprüche

1. Schäkel (124) für eine Triebwerkaufhängung (114) eines Luftfahrzeugs, umfassend:
- eine erste Öffnung (132a) und eine zweite Öffnung (132b), wobei beide dazu bestimmt sind, den Schäkel (124) mit einem Aufhängemast (112) des Luftfahrzeugs zu verbinden, und
- eine dritte Öffnung (132c), die dazu bestimmt ist, den Schäkel (124) mit einem Triebwerk des Luftfahrzeugs zu verbinden,
wobei:
- die dritte Öffnung (132c) in Bezug auf eine Ebene (P) beabstandet ist, die gleichzeitig durch eine Achse (134a) der ersten Öffnung (132a) und durch eine Achse (134b) der zweiten Öffnung (132b) verläuft, wobei
- wenn der Schäkel im Schnitt entlang einer beliebigen Ebene im rechten Winkel zu den Achsen (134a, 134b) der ersten und zweiten Öffnung betrachtet wird, ein erster Geradenabschnitt (T), der von der Achse (134a) der ersten Öffnung (132a) bis zu einer Achse (134c) der dritten Öffnung (132c) verläuft, einen Bereich (R) außerhalb des Schäkels durchquert,
wobei der Schäkel **dadurch gekennzeichnet ist, dass** er derart ausgebildet ist, dass, wenn der Schäkel im Schnitt entlang der Ebene im rechten Winkel zu den Achsen (134a, 134b) der ersten und zweiten Öffnung betrachtet wird, ein zweiter Geradenabschnitt (S), der von der Achse (134b) der zweiten Öffnung bis zur Achse (134c) der dritten Öffnung verläuft, den Bereich (R) außerhalb des Schäkels durchquert.

2. Schäkel nach Anspruch 1, wobei der Bereich (R) außerhalb des Schäkels (124) von einem Teil des zweiten Geradenabschnitts (S) durchquert wird, dessen Länge (L1) größer als oder gleich einem Drittel der Länge (L) des zweiten Geradenabschnitts ist.

3. Schäkel nach Anspruch 1 oder 2, wobei, wenn der Schäkel (124) im Schnitt entlang einer beliebigen Ebene im rechten Winkel zu den jeweiligen Achsen (134a, 134b, 134c) der Öffnungen betrachtet wird, ein erster Abschnitt (136) des Schäkels, der die zweite Öffnung (132b) mit der dritten Öffnung (132c) verbindet, einen an der Seite des zweiten Geradenabschnitts (S) befindlichen Rand (138) aufweist, wobei wenigstens ein Abschnitt (140) dieses Rands von einer Geraden (D), die sich mit dem zweiten Geradenabschnitt (S) überlagert, mit einem Abstand (d) beabstandet ist, der größer als ein Viertel der Länge (L) des zweiten Geradenabschnitts (S) ist.

4. Schäkel nach einem der Ansprüche 1 bis 3, wobei, wenn der Schäkel (124) im Schnitt entlang einer beliebigen Ebene im rechten Winkel zu den jeweiligen Achsen (134a, 134b, 134c) der Öffnungen betrachtet wird, ein zweiter Abschnitt (142) des Schäkels, der zwischen der zweiten und dritten Öffnung (132b, 132c) angeordnet ist und durch zwei Halbgeraden (E) und (F) begrenzt wird, die von der Mitte (M) des zweiten Geradenabschnitts (S) ausgehen, wobei sie sich jeweils in Richtung auf den Schäkel (124) erstrecken, zwei gegenüberliegende gekrümmte Ränder (138, 144) aufweist, die in jedem Punkt von der einen bis zu der anderen der Halbgeraden (F) und (E) jeweils eine zu dem zweiten Geradenabschnitt (S) hin gerichtete Konkavität aufweisen.

5. Schäkel nach Anspruch 4, wobei die Halbgeraden (E) und (F) zwischen ihnen einen stumpfen Winkel (β) über 90 Grad bilden.

6. Schäkel nach Anspruch 4 oder 5, wobei:
- derjenige (138) der gekrümmten Ränder, der sich an der Seite des zweiten Geradenabschnitt (S) befindet, in jedem Punkt des zweiten Abschnitts (142) des Schäkels einen Krümmungsradius aufweist, der größer als ein Viertel der Länge (L) des zweiten Geradenabschnitts (S) ist, und
- derjenige (144) der gekrümmten Ränder, der sich an der anderen Seite des Schäkels befindet, in jedem Punkt des zweiten Abschnitts (142) des Schäkels einen Krümmungsradius aufweist, der größer als ein Drittel der Länge (L) des zweiten Geradenabschnitts (S) ist.

7. Schäkel nach einem der Ansprüche 4 bis 6, wobei, wenn der Schäkel (124) im Schnitt entlang einer beliebigen Ebene im rechten Winkel zu den jeweiligen Achsen (134a, 134b, 134c) der Öffnungen betrachtet wird, der zweite Abschnitt (142) des Schäkels einen Querschnitt aufweist, der in der Richtung ausgehend von der zweiten Öffnung (132b) zur dritten Öffnung (132c) von der einen bis zur anderen der zwei Halbgeraden (F) und (E) kleiner wird.

8. Schäkel nach einem der Ansprüche 4 bis 7, **dadurch gekennzeichnet, dass**, wenn der Schäkel (124) im Schnitt entlang einer beliebigen Ebene im rechten Winkel zu den jeweiligen Achsen (134a, 134b, 134c) der Öffnungen betrachtet wird, zwei Halbgeraden existieren, die einen gemeinsamen Ursprung (O) aufweisen, so dass:
- eine erste (D1) dieser Halbgeraden durch die jeweiligen Achsen (134a, 134b) der ersten und zweiten Öffnung (132a, 132b) verläuft,
- eine zweite (D2) dieser Halbgeraden in einem Punkt (Pt), der in Bezug auf die erste Halbgerade (D1) an der Seite der dritten Öffnung (132c) angeordnet ist, eine Mittellinie (Lm) des zweiten Abschnitts (142) des Schäkels berührt, und
- diese zwei Halbgeraden (D1, D2) zwischen ihnen einen Winkel (θ) unter 90 Grad bilden.

9. Triebwerkaufhängung (114) für ein Luftfahrzeug, umfassend:
- eine Tragstruktur (20), die dazu bestimmt ist, mit einem Aufhängemast (112) des Luftfahrzeugs fest verbunden zu werden und die eine erste Öffnung und eine zweite Öffnung umfasst,
- ein erstes Verbindungsorgan (128a) und ein zweites Verbindungsorgan (128b), die jeweils in die erste und zweite Öffnung der Tragstruktur eingepasst sind,
- ein drittes Verbindungsorgan (128c), das dazu bestimmt ist, mit einem Triebwerk des Luftfahrzeugs verbunden zu werden,
**dadurch gekennzeichnet, dass** sie wenigstens einen Schäkel (124) nach einem der vorhergehenden Ansprüche umfasst,
dass das erste und zweite Verbindungsorgan (128a, 128b) in die erste und zweite Öffnung (132a, 132b) des Schäkels eingepasst sind,
und dass das dritte Verbindungsorgan (128c) in die dritte Öffnung (132c) des Schäkels eingepasst ist.

10. Triebwerkaufhängung nach Anspruch 9, ferner umfassend eine Vorrichtung zur Dissipation von mechanischer Energie (152), die das zweite und dritte Verbindungsorgan (128b, 128c) derart miteinander verbindet, dass eventuelle relative Schwingungen dieser Verbindungsorgane gedämpft werden.

11. Triebwerkaufhängung nach Anspruch 9 oder 10, umfassend neben dem Schäkel (124), der "flexibler Schäkel" genannt wird, wenigstens einen anderen Schäkel (158), der "starrer Schäkel" genannt wird und Folgendes umfasst:
- eine erste Öffnung (132a') und eine zweite Öffnung (132b'), in die jeweils das erste und das zweite Verbindungsorgan (128a, 128b) eingepasst sind, und
- eine dritte Öffnung (132c'), in der das dritte Verbindungsorgan (128c) mit Spiel montiert ist,
wobei der starre Schäkel (158) derart ausgestaltet ist, dass, wenn der starre Schäkel im Schnitt entlang einer beliebigen Ebene im rechten Winkel zu den jeweiligen Achsen (134a', 134b') der Öffnungen des starren Schäkels betrachtet wird, ein erster Geradenabschnitt (T'), der von der Achse (134a') der ersten Öffnung (132a') bis zu einer Achse (134c') der dritten Öffnung (132c') des starren Schäkels verläuft, einen Bereich (R') außerhalb des starren Schäkels (158) durchquert, wobei sich jedoch ein zweiter Geradenabschnitt (S'), der von der Achse (134b') der zweiten Öffnung (132b') bis zur Achse (134c') der dritten Öffnung (132c') des starren Schäkels verläuft, zur Gänze innerhalb des starren Schäkels (158) befindet.

12. Antriebseinheit (108) für ein Luftfahrzeug, umfassend ein Turbotriebwerk sowie einen Aufhängemast (12), der zur Befestigung des Turbotriebwerks an einer Flugzeugzelle dient, **dadurch gekennzeichnet, dass** sie wenigstens eine Triebwerkaufhängung (114) nach einem der Ansprüche 9 bis 11 umfasst, die das Turbotriebwerk mit dem Aufhängemast verbindet.

13. Antriebseinheit nach Anspruch 12, wobei die Triebwerkaufhängung (114) gemäß Anspruch 11 aufgebaut ist und wobei der flexible (124) und der starre Schäkel (158) dieser Triebwerkaufhängung derart ausgestaltet sind, dass der flexible Schäkel (124) ein Spiel (j) zwischen dem dritten Verbindungsorgan (128c) und dem starren Schäkel (158) aufrechterhält, solang die auf die Triebwerkaufhängung einwirkenden transversalen Kräfte unterhalb eines vorbestimmten Schwellenwerts liegen, und dass das dritte Verbindungsorgan (128c) durch eine ausreichende Verformung des flexiblen Schäkels (124) bis zum Anschlag in die dritte Öffnung (132c') des starren Schäkels (158) eingefügt wird, wenn die transversalen Kräfte über diesem vorbestimmten Schwellenwert liegen.

14. Luftfahrzeug, **dadurch gekennzeichnet, dass** es wenigstens eine Antriebseinheit (108) nach Anspruch 12 oder 13 umfasst.

## Claims

1. Shackle (124) for aircraft engine mounts (114), including:
- a first orifice (132a) and a second orifice (132b), both intended to connect said shackle (124) to an aircraft pylon (112), and
- a third orifice (132c), intended to connect said shackle (124) to an aircraft engine, wherein:
- said third orifice (132c) is offset relative to a plane (P) passing simultaneously through an axis (134a) of said first orifice (132a) and through an axis (134b) of said second orifice (132b), and
- when said shackle is seen in section in any plane orthogonal to the axes (134a, 134b) of said first and second orifices, a first straight line segment (T) extending from the axis (134a) of said first orifice (132a) to an axis (134c) of said third orifice (132c) crosses a region (R) external to said shackle,
**characterized by** said shackle being conformed so that, when said shackle is seen in section in any plane orthogonal to said axes (134a, 134b) of said first and second orifices, a second straight line segment (S) extending from the axis (134b) of said second orifice to the axis (134c) of said third orifice crosses said region (R) external to the shackle.

2. Shackle according to Claim 1, wherein said region (R) external to the shackle (124) is crossed by a portion of said second straight line segment (S) having a length (L1) greater than or equal to one third of the length (L) of said second straight line segment.

3. Shackle according to Claim 1 or 2, wherein, if said shackle (124) is seen in section in any plane orthogonal to the respective axes (134a, 134b, 134c) of said orifices, a first portion (136) of the shackle, connecting said second orifice (132b) to said third orifice (132c), has an edge (138), situated on the same side as said second straight line segment (S), at least a portion (140) of which is offset from a straight line (D) superposed on said second straight line segment (S) by a distance (d) greater than one quarter of the length (L) of said second straight line segment (S).

4. Shackle according to any one of Claims 1 to 3, wherein, if said shackle (124) is seen in section in any plane orthogonal to the respective axes (134a, 134b, 134c) of said orifices, a second portion (142) of the shackle, situated between said second and third orifices (132b, 132c) and delimited by two half-lines (E) and (F) each extending from the middle (M) of the second straight line segment (S) in the direction of the shackle (124), has two opposite curved edges (138, 144) each having a concavity oriented toward said second straight line segment (S), at any point from one to the other of said half-lines (F) and (E).

5. Shackle according to Claim 4, wherein said half-lines (E) and (F) form between them a salient angle (β) greater than 90 degrees.

6. Shackle according to Claim 4 or 5, wherein:
- the curved edge (138) situated on the same side as said second straight line segment (S) has, at any point on said second portion (142) of the shackle, a radius of curvature greater than one quarter of the length (L) of the second straight line segment (S), and
- the curved edge (144) that is situated on the other side of the shackle has, at any point on said second portion (142) of the shackle, a radius of curvature greater than one third of the length (L) of the second straight line segment (S).

7. Shackle according to any one of Claims 4 to 6, wherein, if said shackle (124) is seen in section in any plane orthogonal to the respective axes (134a, 134b, 134c) of said orifices, said second portion (142) of the shackle has a section decreasing in the direction from said second orifice (132b) toward said third orifice (132c), from one to the other of said two half-lines (F) and (E).

8. Shackle according to any one of Claims 4 to 7, **characterized in that**, if said shackle (124) is seen in section in any plane orthogonal to the respective axes (134a, 134b, 134c) of said orifices, there exist two half-lines having a common origin (O) such that:
- a first half-line (D1) passes through the respective axes (134a, 134b) of said first and second orifices (132a, 132b),
- a second half-line (D2) is tangential to a mid-line (Lm) of said second portion (142) of the shackle at a point (Pt) situated on the same side as said third orifice (132c) relative to said first half-line (D1), and
- these half-lines (D1, D2) form between them an angle (θ) less than 90 degrees.

9. Aircraft engine mount (114) including:
- a support structure (20) designed to be fastened to an aircraft pylon (112) and including a first orifice and a second orifice,
- a first connecting member (128a) and a second connecting member (128b) that are respectively mounted with a close fit in said first and second orifices of said support structure,
- a third connecting member (128c) designed to be connected to an aircraft engine, **characterized by** comprising at least one shackle (124) according to any one of the preceding Claims,
further **characterized by** said first and second connecting members (128a, 128b) being mounted with a close fit in said first and second orifices (132a, 132b) of said shackle, and further **characterized by** said third connecting member (128c) being mounted with a close fit in said third orifice (132c) of said shackle.

10. Engine mount according to Claim 9, further including a mechanical energy dissipating device (152) connecting said second and third connecting members (128b, 128c) so as to damp any relative vibrations of these connecting members.

11. Engine mount according to Claim 9 or 10, including, in addition to said shackle (124), called a "flexible shackle", at least one other shackle (158), called a "rigid shackle", the latter including:
- a first orifice (132a') and a second orifice (132b') in which said first and second connecting members (128a, 128b), respectively, are mounted with a close fit, and
- a third orifice (132c') in which said third connecting member (128c) is mounted with clearance,
said rigid shackle (158) being conformed so that, if said rigid shackle is seen in section in any plane orthogonal to respective axes (134a', 134b') of said orifices of said rigid shackle, a first straight line segment (T') extending from the axis (134a') of the first orifice (132a') to an axis (134c') of the third orifice (132c') of the rigid shackle crosses a region (R') external to the rigid shackle (158), but a second straight line segment (S') extending from the axis (134b') of said second orifice (132b') to the axis (134c') of said third orifice (132c') of the rigid shackle is entirely situated inside said rigid shackle (158).

12. Aircraft propulsion system (108) including a jet engine and a pylon (12) designed to connect said jet engine to an aircraft cell, **characterized by** comprising at least one engine mount (114) according to Claim 9 connecting said jet engine to said pylon.

13. Propulsion system according to Claim 12, wherein said engine mount (114) is as claimed in Claim 11 and said flexible shackle (124) and said rigid shackle (158) of this engine mount are conformed so that said flexible shackle (124) maintains a clearance (j) between said third connecting member (128c) and said rigid shackle (158) if transverse forces apply to said engine mount at a level below a predetermined threshold and so that said third connecting member (128c) comes to abut in said third orifice (132c') of said rigid shackle (158) thanks to sufficient deformation of said flexible shackle (124) if said transverse forces are at a level above said predetermined threshold.

14. Aircraft, **characterized in that** it includes at least one propulsion system (108) according to Claim 12 or 13.
